# EUROPÄISCHE PATENTSCHRIFT

(11) **EP 3 231 338 B1**
(45) Veröffentlichungstag und Bekanntmachung des Hinweises auf die Patenterteilung: **09.10.2019**
(21) Anmeldenummer: 17160324.4
(22) Anmeldetag: 10.03.2017
(51) Int. Cl.: A47K 5/12, B05B 11/00

(54) **SPENDER FÜR EIN FLIESSFÄHIGES MEDIUM**
DISPENSER FOR A FLOWABLE MEDIUM
DISTRIBUTEUR POUR UN MILIEU FLUIDE

(30) Priorität: 15.04.2016 AT 503362016
(43) Veröffentlichungstag der Anmeldung: 18.10.2017
(73) Patentinhaber: Hagleitner, Hans Georg, 5700 Zell am See (AT)
(72) Erfinder: Hagleitner, Hans Georg, 5700 Zell am See (AT)
(74) Vertreter: Torggler & Hofinger Patentanwälte

(56) Entgegenhaltungen:
- JP-U- H0 728 496
- US-A1- 2004 217 137
- US-A1- 2012 267 396

## Beschreibung

Die Erfindung betrifft einen Spender für ein fließfähiges Medium, mit einem Gehäuse, in dem ein einen unterseitigen Auslass aufweisender Behälter, der an der Oberseite mit einer Aufnahme für einen austauschbaren Vorrat versehen ist, und eine dem Auslass zugeordnete Pumpe angeordnet sind, wobei der Behälter eine Luftöffnung aufweist, die oberhalb des maximalen Füllstands liegt und dem Behälter eine Einrichtung zum Erfassen des Füllstandes des Mediums im Behälter zugeordnet ist.

Aus der JP 07-28496 U ist ein Spender gemäß dem Oberbegriff des Anspruchs 1 offenbart. Aus der WO 2010/115223 ist ein Spender mit einem Behälter und einem austauschbaren Vorrat, insbesondere Seife, bekannt, bei dem der Behälter aus dem Spendergehäuse entnommen werden kann und dessen Austrittsöffnung zur Förderpumpe hin mit einer sich bei Abnahme des Behälters verschließenden Ventil versehen ist. Wird eine an der Unterseite des Behälters angeordnete Pumpe betätigt, so wird eine Portion des Mediums aus dem Behälter abgegeben und dieselbe Menge fließt aus dem in die oberseitige Aufnahme eingesetzten Vorrat in den Behälter nach, sodass der Füllstand im Behälter gleich bleibt. Im Behälter ist eine Einrichtung angeordnet, mit deren Hilfe durch die Erkennung der Absenkung des Füllstands angezeigt wird, dass der Vorrat aufgebraucht ist, und ersetzt werden muss. Bis zum Einsetzen eines neuen Vorrats wird weiterhin Medium aus dem Behälter abgegeben. Da der Behälter luftdicht ist und der Vorrat in einer luftdichten kompressiblen Nachfüllkartusche enthalten ist, fließt bei der Erstbefüllung des Spenders das Medium aus dem Vorrat in den Behälter und die im Behälter eingeschlossene Luft in den Vorrat zurück. Der Spender funktioniert gut, solange das zu spendende Medium dünnflüssig ist, und mit ausreichender Geschwindigkeit aus dem Vorrat ausfließt. Problematisch wird die Abgabe aus dem Vorrat, wenn die Fließgeschwindigkeit sich durch Umwelteinflüsse, beispielsweise Absinken der Umgebungstemperatur, erniedrigt oder ein zähflüssigeres Medium eingesetzt wird.

Ein Spender der eingangs genannten Art zur Abgabe von Seife aus einem Behälter, auf den ein austauschbarer Vorrat aufsetzbar ist, ist der EP 1118300 zu entnehmen. In der Öffnung des Behälters ist eine Hülse angeordnet, die eine Membran des Vorrats durchsticht und der ein federbelastetes Ventil zugeordnet ist. Von der einfließenden Seife aus dem Behälter verdrängte Luft kann daher nicht in den Vorrat zurück, sondern nur über minimale Randspalten zwischen dem Behälter und dem Hals des Vorrates ausströmen, wobei diese Entlüftungsöffnung oberhalb des maximalen Füllstandes liegt.

Aus der AT 13192 U ist ein Verfahren zur Herstellung der Gebrauchsbereitschaft eines Seifenspenders bekannt, bei dem die im Behälter enthaltene Luft durch Wechsel der Förderrichtung der Seifenaustragpumpe verdrängt wird. Details über den Strömungsweg bei der Luftverdrängung sind nicht beschrieben.

Die Erfindung hat es sich zur Aufgabe gestellt, einen Spender der eingangs genannten Art weiterzuentwickeln, um über einen weiten Viskositätsbereich - vor allem bei der Erstverwendung eines Vorrats - den Behälter rasch mit der benötigten Menge des Mediums aus dem Vorrat zu füllen und gegebenenfalls auch im laufenden Betrieb eine ausreichende Nachfließgeschwindigkeit aus dem Vorrat sicherzustellen.

Erfindungsgemäß wird dies dadurch erreicht, dass der Luftöffnung eine füllstandabhängig - vorzugsweise elektrisch - ansteuerbare Verschlusseinrichtung zugeordnet ist.

Der erfindungsgemäße Spender kann jedenfalls übliche, bei Raumtemperatur dünnflüssige Medien in gewohnter Weise verarbeiten. Ist der Behälter leer und wird ein voller Vorrat in die Aufnahme eingesetzt, so fließt das Medium nach unten in den Behälter, und verdrängt gleichzeitig die im Behälter enthaltene Luft im Gegenstrom in den dichtend aufgesetzten Vorrat. Die der Luftöffnung des Behälters zugeordnete Verschlusseinrichtung bleibt geschlossen. Erhöht sich nun die Viskosität des Mediums, beispielsweise durch Abkühlung der Umgebungstemperatur, oder wird ein Medium mit höherer Viskosität eingesetzt, so kann es bei bisherigen Spendern dazu kommen, dass die Füllung des Behälters zu langsam erfolgt, oder sogar unterbleibt, da die Luft aus dem Behälter nicht in den Vorrat entweichen kann und sich ein Überdruck im Behälter aufbaut. Der Überdruck im Behälter kann nun erfindungsgemäß dadurch gezielt abgebaut werden, dass die Verschlusseinrichtung geöffnet wird und Luft aus dem Behälter durch die Luftöffnung ausströmt. Insbesondere in diesem Fall ist die Verschlusseinrichtung nicht direkt an der Luftöffnung des Behälters sondern in einer an die Luftöffnung anschließenden Luftleitung vorgesehen.

In Fortführung dieser Möglichkeiten kann das Ausfließen eines Mediums aus dem Vorrat, dessen Viskosität noch höher ist, dadurch unterstützt werden, dass die Verschlusseinrichtung mit einer Saugpumpe ausgestattet wird, mittels der im Behälter ein Unterdruck erzeugt wird. Schließlich ist es auch denkbar, die Verschlusseinrichtung mit einer reversiblen Pumpe zu versehen, sodass die Luftöffnung und die anschließende Luftleitung zur Verschlusseinrichtung gereinigt werden können. Mittels einer reversiblen Pumpe, beispielsweise einer reversiblen Schlauchquetschpumpe, kann gegebenenfalls auch die Austragpumpe für das Medium unterstützt werden, indem im Behälter ein Überdruck aufgebaut wird. In diesem Fall ist ein Rückschlagventil an der Aufnahme für den Vorrat von Vorteil.

In einer bevorzugten Ausführung, in der der Behälter einen Deckel aufweist, an dem die Aufnahme für den austauschbaren Vorrat vorgesehen ist, ist vorzugsweise vorgesehen, dass der Deckel eine über die Aufnahme nach oben hochstehende Ausbuchtung aufweist, in der die Luftöffnung ausgebildet ist. Die Aufnahme weist bevorzugt einen Schiebesitz für den Vorrat aus, zu dessen beiden Seiten die hochstehende Ausbuchtung des Deckels als Auflage für den eingeschobenen Vorrat ausgebildet ist.

In einer weiteren bevorzugten Ausführung ist für die füllstandabhängige Ansteuerung der Verschlusseinrichtung ein im Behälter angeordneter Schwimmer vorgesehen. Die Bewegung des Schwimmers kann in einer einfachen ersten Ausführung mechanisch auf die Verschlusseinrichtung übertragen werden. Die Verschlusseinrichtung kann aber auch elektrisch angesteuert werden, wenn dem Schwimmer ein Permanentmagnet zugeordnet ist, der mit einem äußeren Reed-Schalter zusammen wirkt, und dessen Signale über eine Elektronik an die Verschlusseinrichtung übermittelt werden. Die Verschlusseinrichtung ist bevorzugt durch ein in Schließstellung federbeaufschlagte Magnetventil, eine elektrische Saugpumpe oder eine reversible Pumpe, beispielweise einer Schlauchquetschpumpe, gebildet.

In Kombination mit einer elektrischen Saugpumpe genügt ein mechanisches Rückschlagventil in der Verschlusseinrichtung der Luftöffnung, das in Schließstellung federbeaufschlagt ist.

Insbesondere eignet sich der erfindungsgemäße Spender zur Abgabe von Abrasivseife, also von Seife mit festen Partikeln in Form eines Granulats oder dergleichen. Andere hochviskose Medien, die bei einer Temperatur von 20° C eine Viskosität zwischen 3000 und 12000 mPa.s, insbesondere zwischen 5000 und 10000 mPa.s aufweisen, lassen sich ebenfalls problemlos dosiert ausgeben.

Nachstehend wird nun die Erfindung an Hand der Figuren der beiliegenden Zeichnungen näher beschrieben, ohne darauf beschränkt zu sein. Es zeigen:
- Fig. 1: einen Spender für ein fließfähiges Medium in Schrägansicht ohne vordere Abdeckung,
- Fig. 2: den Deckel des Behälters aus Fig. 1 in Schrägansicht von oben,
- Fig. 3: eine schematische Darstellung des Spenders nach Fig. 1 mit einer ein Magnetventil aufweisenden Verschlusseinrichtung,
- Fig. 4: eine schematische Darstellung des Spenders nach Fig. 1 mit einer ein mechanisches Rückschlagventil und eine Saugpumpe aufweisenden Verschlusseinrichtung,
- Fig. 5: eine schematische Darstellung des Spenders nach Fig. 1 mit einer eine reversible Schlauchquetschpumpe aufweisenden Verschlusseinrichtung, und
- Fig. 6: eine schematische Darstellung des Spenders nach Fig. 1 mit einer mechanischen Verschlusseinrichtung.

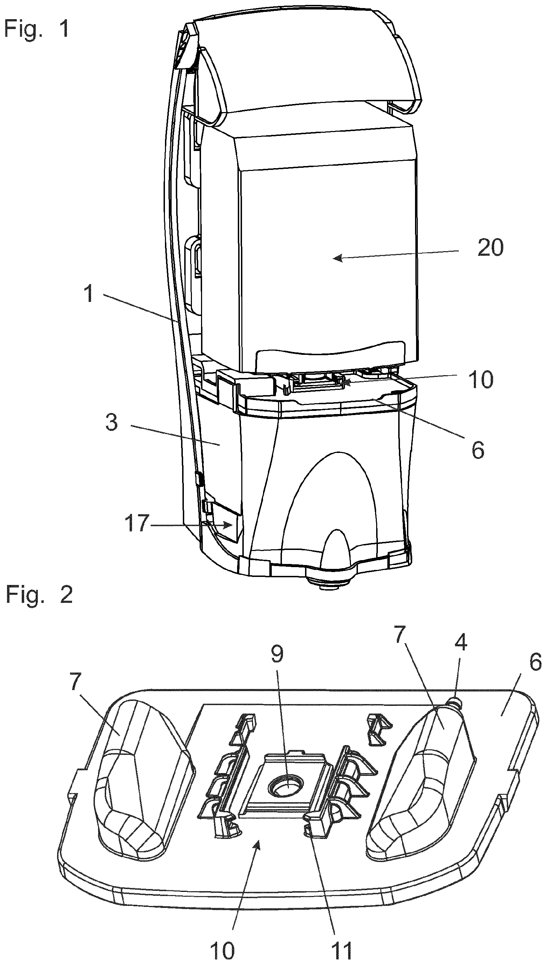

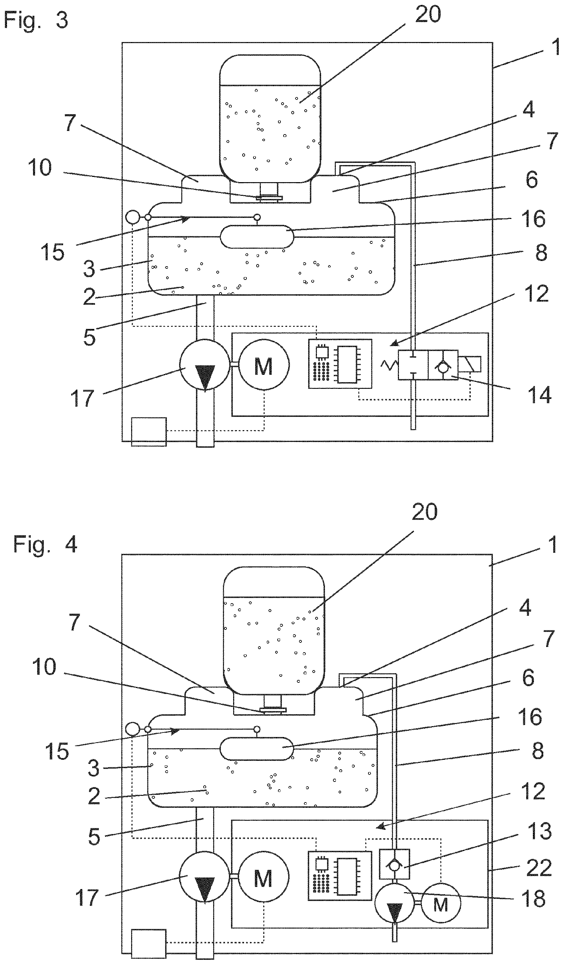

Der Spender nach Fig. 1 weist ein an einer Wand montierbares Gehäuse 1 auf, das mit einer nicht gezeigten vorderen Abdeckung versehen ist. Im unteren Teil des Gehäuses 1 ist ein Behälter 3 angeordnet, dessen Auslass 5 (Fig. 3) eine Austragpumpe 17, insbesondere eine motorisch betriebene Schlauchquetschpumpe zugeordnet ist. Der Behälter 3 ist mit einem Deckel 6 dichtend verschlossen, in dem etwa mittig eine Aufnahme 10 mit einem Schiebesitz 11 und einer zentralen Öffnung 9 (Fig. 2) vorgesehen ist. In die Aufnahme 10 ist ein austauschbarer Vorrat 20 eines Mediums, beispielsweise Seife, Abrasivseife oder dergleichen eingesetzt, bzw. eingeschoben. Zu beiden Seiten der Aufnahme 10 ist eine nach oben ragende Ausbuchtung 7 des Deckels 6 vorgesehen, auf der, wie aus Fig. 3 bis 5 ersichtlich, der eingeschobene Vorrat 20 aufliegt. Ist das Medium ausreichend leichtflüssig, fließt es sowohl bei der Erstbefüllung des Spenders als auch später ohne Schwierigkeiten aus dem Vorrat 20 nach unten in den Behälter 3, wobei die im Behälter 3 eingeschlossene Luft in den Vorrat 20 ausweicht. Aus dem Behälter 3 kann das Medium 2 mittels der Austragpumpe 17 portionsweise abgegeben werden.

Enthält der Vorrat ein Medium 2 mit einer Viskosität, die sich bei sinkender Umgebungstemperatur so weit erhöht, oder die auch bei Raumtemperatur so hoch ist, dass das nicht mehr bzw. zu langsam aus dem Vorrat 20 in den Behälter gelangt, so wird eine Unterstützung notwendig, um den Spender 1 wie gewohnt benützen zu können. Die Unterstützung ergibt sich durch eine Luftöffnung 4 in der Ausbuchtung 7 (Fig. 2, rechts), und eine der Luftöffnung 4 zugeordnete ansteuerbare Verschlusseinrichtung 12. Die Luftöffnung 4 ist höher angeordnet als der Schiebesitz 11 für den Vorrat 20, sodass das aus dem Vorrat 20 nach unten in den Behälter 3 fließende Medium 2 auch ohne Verschluss nicht durch die Luftöffnung 4 übertreten könnte, da der Vorrat 20 luftdicht abgeschlossen ist.

Ist das Medium 2 höher viskos, so kann die Verschlusseinrichtung 12 geöffnet werden, und die im Behälter 3 eingeschlossene Luft gelangt über die Luftöffnung 4 und die angeschlossene Leitung 8 ins Innere des Spenders 1, wodurch das Medium 2 aus dem Vorrat 20 in den Behälter 3 abfließen kann. Der Abbau des Überdrucks im Behälter 3 kann beispielsweise durch Öffnen eines in Schließstellung federbeaufschlagten Magnetventils 14 (Fig. 3) erfolgen, das beispielsweise bei einem Überdruck von 22 mbar öffnet.

Reicht der Abbau des Überdruckes im Behälter nicht aus, da die Viskosität des Mediums 2 noch höher (geworden) ist, um den raschen Abfluss des Mediums 2 aus dem Vorrat 20 sicher zu stellen, so kann die Verschlusseinrichtung 12, wie in Fig. 4 gezeigt, eine Saugpumpe 18 umfassen, der ein mechanisches Rückschlagventil 13 vorgeschaltet ist. Derart lässt sich im Behälter 3 ein Unterdruck erzeugen, der den Abfluss des Mediums 2 aus der Vorrat 20 nochmals verbessert.

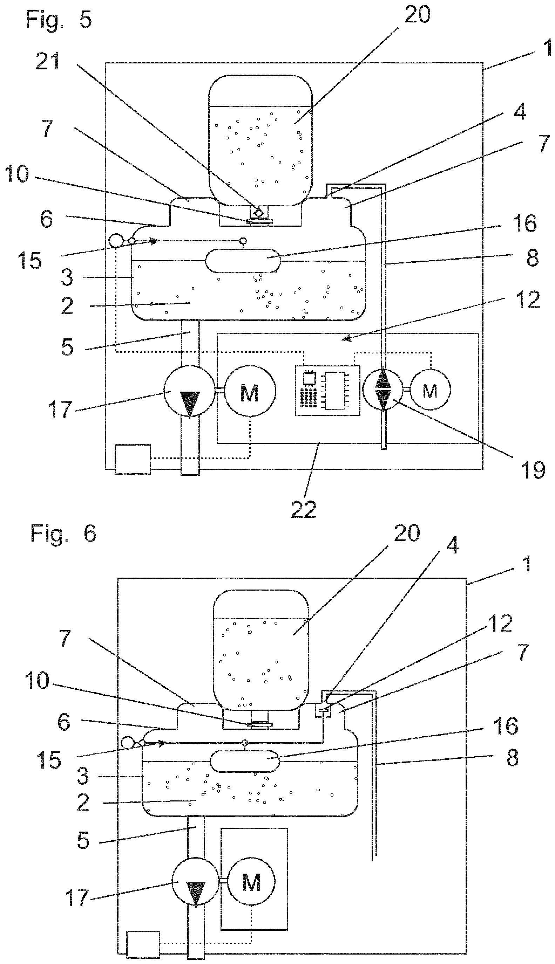

Fig. 5 zeigt noch die Möglichkeit, dass die Luft aus dem Behälter 3 mittels einer reversiblen Pumpe 19, beispielsweise ebenfalls einer Schlauchquetschpumpe abgesaugt wird. Diese Ausführung hat den zusätzlichen Vorteil, dass eine Reinigung der Leitung 8, der Luftöffnung 4 und gegebenenfalls des entleerten Behälters 3 erfolgen kann, indem über die Pumpe 19 ein Reinigungsmittel eingebracht und mit Hilfe der Austragpumpe 17 wieder entfernt wird. In diesem Fall ist zwischen dem Schiebesitz 11 und dem Vorrat 20 ein Rückschlagventil 21 vorgesehen (Fig. 5).

Wie aus den Figuren 3 bis 5 ersichtlich, ist der Behälter 3 mit einer Füllstandmesseinrichtung 15 versehen, die einen Schwimmer 16 umfasst. Sinkt der Füllstand ab, da über die Austragpumpe 17 Medium 2 entnommen ohne dass dies aus dem Vorrat 20 ausgeglichen wird, so wird die Füllstandänderung einer Elektronik übermittelt, die dann entsprechend den voreingestellten Werten die Verschlusseinrichtung 12 öffnet, um den Behälter 3 zu entlüften.

Welche Ausstattung die Verschlusseinrichtung 12 aufweist, richtet sich nach den zu erwartenden bzw. vorgegebenen Viskositätswerten, d. h. falls zu erwarten ist, dass die bloße Entlüftung gemäß Fig. 3 noch keine ausreichende Nachfließgeschwindigkeit aus dem Vorrat 20 in den Behälter 3 bewirkt, wird der Spender bereits gemäß Fig. 4 oder Fig. 5 mit einer Pumpe 18, 19 versehen.

In Fig. 4 und Fig. 5 ist mit 22 eine Umhüllung beziffert, die eine spritzwassergeschützte Abschirmung aller elektrischer und elektronischer Teile darstellt.

Fig. 6 zeigt eine Ausführung, in der die Verschlusseinrichtung 12 direkt vom Schwimmer 16 gesteuert wird. In Verlängerung des Tragarmes des Schwimmers 16 ist ein Ventilstößel vorgesehen, der die in der Ausbuchtung 7 angeordnete Luftöffnung 4 mit steigendem Füllstand im Behälter öffnet, sodass Luft über die Leitung 8 entweichen kann.

Fall ist zwischen dem Schiebesitz 11 und dem Vorrat 20 ein Rückschlagventil 21 vorgesehen (Fig. 5).

Wie aus den Figuren 3 bis 5 ersichtlich, ist der Behälter 3 mit einer Füllstandmesseinrichtung 15 versehen, die einen Schwimmer 16 umfasst. Sinkt der Füllstand ab, da über die Austragpumpe 17 Medium 2 entnommen ohne dass dies aus dem Vorrat 20 ausgeglichen wird, so wird die Füllstandänderung einer Elektronik übermittelt, die dann entsprechend den voreingestellten Werten die Verschlusseinrichtung 12 öffnet, um den Behälter 3 zu entlüften.

Welche Ausstattung die Verschlusseinrichtung 12 aufweist, richtet sich nach den zu erwartenden bzw. vorgegebenen Viskositätswerten, d. h. falls zu erwarten ist, dass die bloße Entlüftung gemäß Fig. 3 noch keine ausreichende Nachfließgeschwindigkeit aus dem Vorrat 20 in den Behälter 3 bewirkt, wird der Spender bereits gemäß Fig. 4 oder Fig. 5 mit einer Pumpe 18, 19 versehen.

In Fig. 4 und Fig. 5 ist mit 22 eine Umhüllung beziffert, die eine spritzwassergeschützte Abschirmung aller elektrischer und elektronischer Teile darstellt.

Fig. 6 zeigt eine Ausführung, in der die Verschlusseinrichtung 12 direkt vom Schwimmer 16 gesteuert wird. In Verlängerung des Tragarmes des Schwimmers 16 ist ein Ventilstößel vorgesehen, der die in der Ausbuchtung 7 angeordnete Luftöffnung 4 mit steigendem Füllstand im Behälter öffnet, sodass Luft über die Leitung 8 entweichen kann.

## Patentansprüche

1. Spender für ein fließfähiges Medium, mit einem Gehäuse (1), in dem ein einen unterseitigen Auslass (5) aufweisender Behälter (3), der an der Oberseite mit einer Aufnahme (10) für einen austauschbaren Vorrat (20) versehen ist, und eine dem Auslass (5) zugeordnete Pumpe (17) angeordnet sind, wobei der Behälter (3) eine Luftöffnung (4) aufweist, die oberhalb des maximalen Füllstands des Behälters (3) liegt, und dem Behälter (3) eine Einrichtung (15) zum Erfassen des Füllstandes des Mediums (2) im Behälter (3) zugeordnet ist, **dadurch gekennzeichnet, dass** der Luftöffnung (4) eine füllstandabhängig - vorzugsweise elektrisch - ansteuerbare Verschlusseinrichtung (12) zugeordnet ist.

2. Spender nach Anspruch 1, **dadurch gekennzeichnet, dass** an die Luftöffnung (4) eine sich nach unten erstreckende Leitung (8) angeschlossen ist, an deren Ende die Verschlusseinrichtung (12) angeordnet ist.

3. Spender nach Anspruch 1, **dadurch gekennzeichnet, dass** die Verschlusseinrichtung (12) direkt an der Luftöffnung (4) des Behälters (3) angeordnet ist.

4. Spender nach einem der Ansprüche 1 bis 3, wobei der Behälter (3) einen Deckel (6) aufweist, an dem die Aufnahme (10) für den austauschbaren Vorrat (20) vorgesehen ist, **dadurch gekennzeichnet, dass** der Deckel (6) eine über die Aufnahme (10) nach oben hochstehende Ausbuchtung (7) aufweist, in der die Luftöffnung (4) ausgebildet ist.

5. Spender nach Anspruch 4, **dadurch gekennzeichnet, dass** die Aufnahme (10) einen Schiebesitz (11) aufweist, und die Ausbuchtung (7) beidseitig des Schiebesitzes (11) als Auflage für den eingeschobenen Vorrat (20) ausgebildet ist.

6. Spender nach Anspruch 1, **dadurch gekennzeichnet, dass** die Einrichtung (15) zum Erfassen des Füllstandes einen im Behälter (3) angeordneten Schwimmer (16) aufweist.

7. Spender nach Anspruch 1 oder 6, **dadurch gekennzeichnet, dass** die Verschlusseinrichtung (12) der Luftöffnung (4) elektrisch oder von der Einrichtung (15) zum Erfassen des Füllstandes mechanisch ansteuerbar ist.

8. Spender nach Anspruch 6 und 7, **dadurch gekennzeichnet, dass** dem Schwimmer (16) ein Permanentmagnet zugeordnet ist, wobei außerhalb des Behälters (3) ein mit dem Permanentmagneten zusammen wirkender Reed-Kontakt vorgesehen ist.

9. Spender nach einem der Ansprüche 1 bis 8, dass die Verschlusseinrichtung (12) ein Rückschlagventil (13), ein Magnetventil (14), eine Saugpumpe (18), oder eine reversible Pumpe (19) aufweist.

10. Spender nach einem der Ansprüche 1 bis 9, **dadurch gekennzeichnet, dass** eine optische oder akustische Leerstandanzeige aktiviert wird, sobald der Füllstand des Mediums (2) im Behälter (3) sinkt.

11. Spender nach einem der Ansprüche 7 bis 10, **dadurch gekennzeichnet, dass** alle elektrischen Elemente in einer gegen Spritzwasser geschützten Umhüllung (22) innerhalb des Gehäuses (3) angeordnet sind.

12. Spender nach einem der Ansprüche 1 bis 11, **dadurch gekennzeichnet, dass** der Vorrat (20) Abrasivseife enthält.

13. Spender nach einem der Ansprüche 1 bis 12, **dadurch gekennzeichnet, dass** der Vorrat (20) ein Medium enthält, das bei einer Temperatur von 20° C eine Viskosität zwischen 3000 und 12000 mPa.s, vorzugsweise zwischen 5000 und 10000 mPa.s aufweist.

## Claims

1. A dispenser for a fluid medium comprising a housing (1) in which a container (3) which has an outlet (5) at its underside and which is provided at the top side with a receiving means (10) for a replaceable supply (20) and a pump (17) associated with the outlet (5) are arranged, wherein the container (3) has an air opening (4) disposed above the maximum filling level of the container (3) and associated with the container (3) is a device (15) for detecting the filling level of the medium (2) in the container (3), **characterised in that** associated with the air opening (4) is a closure device (12) which is actuable in dependence on the filling level - preferably electrically - .

2. A dispenser according to claim 1 **characterised in that** connected to the air opening (4) is a downwardly extending line (8), at the end of which the closure device (12) is arranged.

3. A dispenser according to claim 1 **characterised in that** the closure device (12) is arranged directly at the air opening (4) of the container (3).

4. A dispenser according to one of claims 1 to 3 wherein the container (3) has a cover (6) at which the receiving means (10) for the replaceable supply (20) is provided, **characterised in that** the cover (6) has a bulge portion (7) which projects upwardly beyond the receiving means (7) and in which the air opening (4) is formed.

5. A dispenser according to claim 4 **characterised in that** the receiving means (10) has a sliding seat (11) and the bulge portion (7) on both sides of the sliding seat (11) is in the form of a support for the inserted supply (20).

6. A dispenser according to claim 1 **characterised in that** the device (15) for detecting the filling level has a float (16) arranged in the container (3).

7. A dispenser according to claim 1 or claim 6 **characterised in that** the closure device (12) of the air opening (4) is actuable electrically or mechanically by the device (15) for detecting the filling level.

8. A dispenser according to claim 6 and claim 7 **characterised in that** a permanent magnet is associated with the float (16), wherein provided outside the container (3) is a reed contact cooperating with the permanent magnet.

9. A dispenser according to one of claims 1 to 8 **characterised in that** the closure device (12) has a non-return valve (13), a solenoid valve (14), a suction pump (18) or a reversible pump (19).

10. A dispenser according to one of claims 1 to 9 **characterised in that** an optical or acoustic empty display is activated as soon as the filling level of the medium (2) in the container (3) falls.

11. A dispenser according to one of claims 7 to 10 **characterised in that** all electrical elements are arranged in an enclosure (22), protected from splash water, within the housing (3).

12. A dispenser according to one of claims 1 to 11 **characterised in that** the supply (20) contains abrasive soap.

13. A dispenser according to one of claims 1 to 12 **characterised in that** the supply (20) contains a medium which at a temperature of 20°C is of a viscosity of between 3000 and 12000 mPa.s, preferably between 5000 and 10000 mPa.s.

## Revendications

1. Distributeur pour un milieu fluide, avec un boîtier (1), dans lequel sont disposés un contenant (3) présentant une sortie (5) côté inférieur, qui est pourvu au côté supérieur d'un logement (10) pour un réservoir (20) pouvant être remplacé, et une pompe (17) associée à la sortie (5), dans lequel le contenant (3) présente une ouverture d'air (4) qui est située au-dessus du niveau de remplissage maximal du contenant (3), et un système (15) servant à détecter le niveau de remplissage du milieu (2) dans le contenant (3) est associé au contenant (3), **caractérisé en ce qu'**un système de fermeture (12) pouvant être commandé, de préférence de manière électrique, en fonction du niveau de remplissage est associé à l'ouverture d'air (4).

2. Distributeur selon la revendication 1, **caractérisé en ce qu'**est raccordé à l'ouverture d'air (4) un conduit (8) s'étendant vers le bas, à l'extrémité duquel est disposé un système de fermeture (12).

3. Distributeur selon la revendication 1, **caractérisé en ce que** le système de fermeture (12) est disposé directement à l'ouverture d'air (4) du contenant (3).

4. Distributeur selon l'une quelconque des revendications 1 à 3, dans lequel le contenant (3) présente un couvercle (6), sur lequel le logement (10) pour le réservoir (20) pouvant être remplacé est prévu, **caractérisé en ce que** le couvercle (6) présente un renflement (7) s'élevant vers le haut au-dessus du logement (10), dans lequel est réalisée l'ouverture d'air (4).

5. Distributeur selon la revendication 4, **caractérisé en ce que** le logement (10) présente un siège coulissant (11), et le renflement (7) est réalisé de part et d'autre du siège coulissant (11) sous la forme d'un support pour le réservoir (20) inséré.

6. Distributeur selon la revendication 1, **caractérisé en ce que** le système (15) servant à détecter le niveau de remplissage présente un flotteur (16) disposé dans le contenant (3).

7. Distributeur selon la revendication 1 ou 6, **caractérisé en ce que** le système de fermeture (12) de l'ouverture d'air (4) peut être commandé de manière électrique ou de manière mécanique par le système (15) servant à détecter le niveau de remplissage.

8. Distributeur selon la revendication 6 et 7, **caractérisé en ce qu'**un aimant permanent est associé au flotteur (16), dans lequel un contact à lames souples coopérant avec l'aimant permanent est prévu à l'extérieur du contenant (3).

9. Distributeur selon l'une quelconque des revendications 1 à 8, où le système de fermeture (12) présente une soupape anti-retour (13), une électrovanne (14), une pompe d'aspiration (18) ou une pompe réversible (19).

10. Distributeur selon l'une quelconque des revendications 1 à 9, **caractérisé en ce qu'**un affichage de niveau vide optique ou acoustique est activé dès que le niveau de remplissage du milieu (2) baisse dans le contenant (3).

11. Distributeur selon l'une quelconque des revendications 7 à 10, **caractérisé en ce que** tous les éléments électriques sont disposés à l'intérieur du boîtier (3) dans une enveloppe (22) protégée contre l'eau pulvérisée.

12. Distributeur selon l'une quelconque des revendications 1 à 11, **caractérisé en ce que** le réservoir (20) contient du savon abrasif.

13. Distributeur selon l'une quelconque des revendications 1 à 12, **caractérisé en ce que** le réservoir (20) contient un milieu qui présente à une température de 20 °C une viscosité entre 3000 et 12 000 mPa.s, de préférence entre 5000 et 10 000 mPa.s.
